Europäisches Patentamt

European Patent Office

Office européen des brevets

(19)

(11) Publication number: **0 046 617**
**B1**

(12) # EUROPEAN PATENT SPECIFICATION

(45) Date of publication of patent specification: **04.04.84**

(51) Int. Cl.³: **F 16 L 59/12** //B29D23/10, B29C27/00

(21) Application number: **81200905.8**

(22) Date of filing: **14.08.81**

(54) Spacer means for an insulated plastics pipe and composite pipe.

(30) Priority: **27.08.80 NL 8004849**

(43) Date of publication of application:
**03.03.82 Bulletin 82/9**

(45) Publication of the grant of the patent:
**04.04.84 Bulletin 84/14**

(84) Designated Contracting States:
**AT BE CH DE FR GB IT LI LU NL SE**

(56) References cited:
**EP - A - 0 018 048
DE - A - 2 823 101
FR - A - 1 076 473
FR - A - 2 334 042
US - A - 3 650 579
US - A - 3 782 452
US - A - 4 250 927**

(73) Proprietor: **WAVIN B.V.**
**Händellaan 251**
**NL-8031 EM Zwolle (NL)**

(72) Inventor: **Lenters, Egbert**
**56 Saturnusstraat**
**NL-7771 XX Hardenberg (NL)**

(74) Representative: **van der Veken, Johannes Adriaan**
**et al,**
**EXTERPATENT Willem Witsenplein 4**
**NL-2596 BK 's-Gravenhage (NL)**

Courier Press, Leamington Spa, England.

Spacer means for an insulated plastics pipe and composite pipe

The invention relates to a composite pipe consisting of at least one inner pipe of a strongly postcrystallizing plastic, surrounded by a tubular covering being maintained in a spaced relation with respect to the inner pipe, the space provided between the inner pipe and the tubular covering being filled with a foamplastics insulating material.

Such a composite pipe has been disclosed in the non prepublished EP—A—0 018 048.

This composite pipe presents the disadvantage that it is rather difficult to maintain the tubular covering in a concentric relationship with respect to the central pipe.

It has already been proposed (vide DE—A—2 823 101) to use a composite pipe comprising a central pipe with a disk like spacer means but these spacer means are difficult to be manufactured and difficult to be accommodated. This holds the more if central pipes of a strongly postcrystallizing plastic have to be provided with such disk like spacer means, as these plastic pipes are installed in great length without sealed joints.

Moreover, these pipes of a strongly postcrystallizing plastic are very liable to damages after their production and in the stage of providing same with the foam plastic insulating layer, so that the central pipes are easily damaged when a disk like spacer means is pushed over the central pipe.

In order to avoid the disk like spacer means DE—A—2 823 101 discloses the use of strips of foam plastic as spacer means but these strips may be easily deformed during the production of the foam plastic insulating layer from a foamable plastic composition.

It is now the aim of the invention to provide a composite pipe comprising easily installable spacer means which do not damage a central pipe of a strongly postcrystallizing plastic when applied and which spacer means are not deformed during the foaming of the plastic composition forming the insulating layer.

This aim is attained in that a plastics spacer having a lateral opening along its length is embedded in the foam plastics between the tubular covering and the inner pipe, said spacer comprising two opposite resilient legs with cylindrical sections forming part of one cylinder surface and of cooperating with the inner pipe, said legs having protruding spacing parts with outwardly curved extremities, and at least one additional protruding spacing part resiliently connecting said legs, and said laterial opening being provided between the ends of the legs to enable pushing of the spacer over the inner pipe.

Suprisingly the rather easily damageable central pipe is not damaged when using the abovementioned plastic spacer means.

It is to be noted that US—A—3 782 452 discloses metal spacer means comprising two opposite resilient legs with cylindrical sections forming part of one cylinder surface and cooperating with a central metal pipe, said legs having protruding spacing parts with outwardly curved extremites and at least one additional protruding spacing part resiliently connecting said legs.

Apart from the fact that metal spacer means easily damage a central pipe of a postcrystallizing plastic, these spacer means comprise parts interengaging each other at their lower side which involve even more damage to a central plastics pipe of the abovementioned type.

US—A—3 650 579 disclose a sucker rod guide of plastic material being clipped onto a metal sucker rod. However, it could not be expected that clipping of a spacer means of plastic onto a pipe of a strongly postcrystallizing plastic would not involve damage to the rather fragile plastic material of the central pipe.

In a preferred embodiment the spacer comprises second resilient leg portions capable of engaging a return pipe, said second leg portions being connected with first leg portions by an intermediate part. This allows the use of the same spacer for a supply and discharge line to be provided to be tubular covering.

Figure 1 is a view of a spacer means according to the invention on a central plastics pipe;

Figure 2 shows the manufacture of a spacer starting from a profile of the spacer and fitting the spacer onto a central pipe;

Figure 3 shows a device for surrounding a central pipe with a covering so as to inject a foaming plastics composition, and

Figure 4 shows a view of a modified spacer means according to the invention on a central supply pipe and a central return pipe.

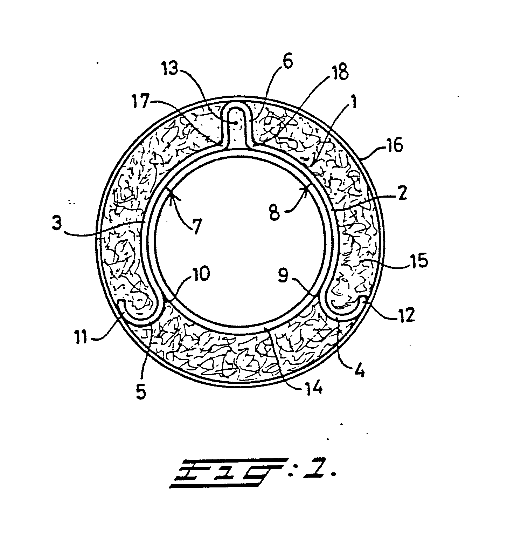

Figure 1 shows a plastics spacer 1 which is open at its lower end and which comprises two opposed resilient first legs 2 and 3. The first legs 2 and 3 carry protruding spacing parts 4, 5, while one additional other protruding spacing part 6 is symmetrically disposed with respect to said protruding spacing parts 4 and 5.

The spacer 1 is disposed on a central feed pipe 14 of polybutylene or of another polyolefin, which is covered with a foam plastics layer 15 of polyurethane foam, the polyurethane foam layer 15 in turn being covered with a polyethylene covering 16 which, however, may also consist of a layer of paper around which a polyethylene covering is then subsequently provided.

A spacer 1 preferably comprises two cylindrical sections 7, 8 which at their free ends 9, 10 are bent towards the outside thereby forming bent spacing parts which comprise curved extremities 11 and 12.

At their other ends 17 and 18, the cylindrical sections 2, 3 are interconnected by a U-shaped connecting part 13. When manufacturing such a spacer from a plastics material, such as preferably a polyamide, for example nylon, the U-shaped connecting part 12 will impart a good resilience to the legs 2 and 3, so that the spacer can be easily pressed and secured onto a central pipe 14, from above.

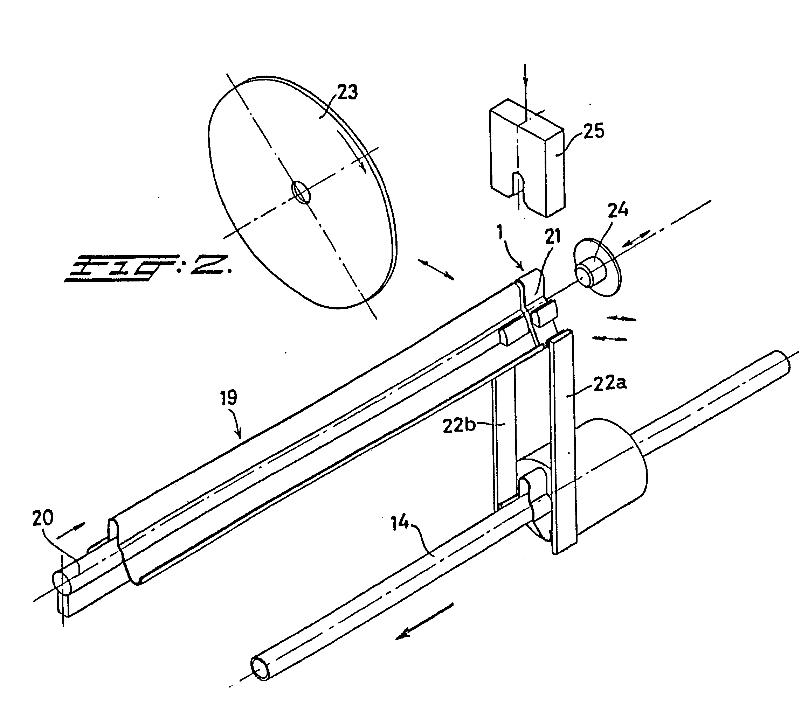

Figure 2 shows a plastics profile 19 from which the spacer 1 is formed. To this end a plastics profile 19 is supplied through a channel-shaped support 20. The end portion 21 of the plastics profile 19 is placed over guide means consisting of two guide plates 22a, 22b along which a spacer separated from the end portion 21 of the plastics profile 19 by means of saw 23, can be moved to a central pipe 14 and be fitted thereon. In order to separate a spacer 1 from the end portion of the plastics profile 19 there is provided a displaceable mandrel 24 which supports the end portion 21 during sawing, so that, after having sawn through the plastics profile 19 a spacer 1 is supported by the mandrel 24.

By pulling away mandrel 24, a spacer 1 will be able to move downwards along the guide plates 22a, 22b.

In order to be able to subsequently press a saucer 1 onto a central pipe 14, a pressure member 25 presses upon a spacer 1 in such a way that the first legs 2 and 3 resiliently move from each other and the cylindrical sections 7 and 8 are allowed to adjoin the outer wall of the central pipe 14.

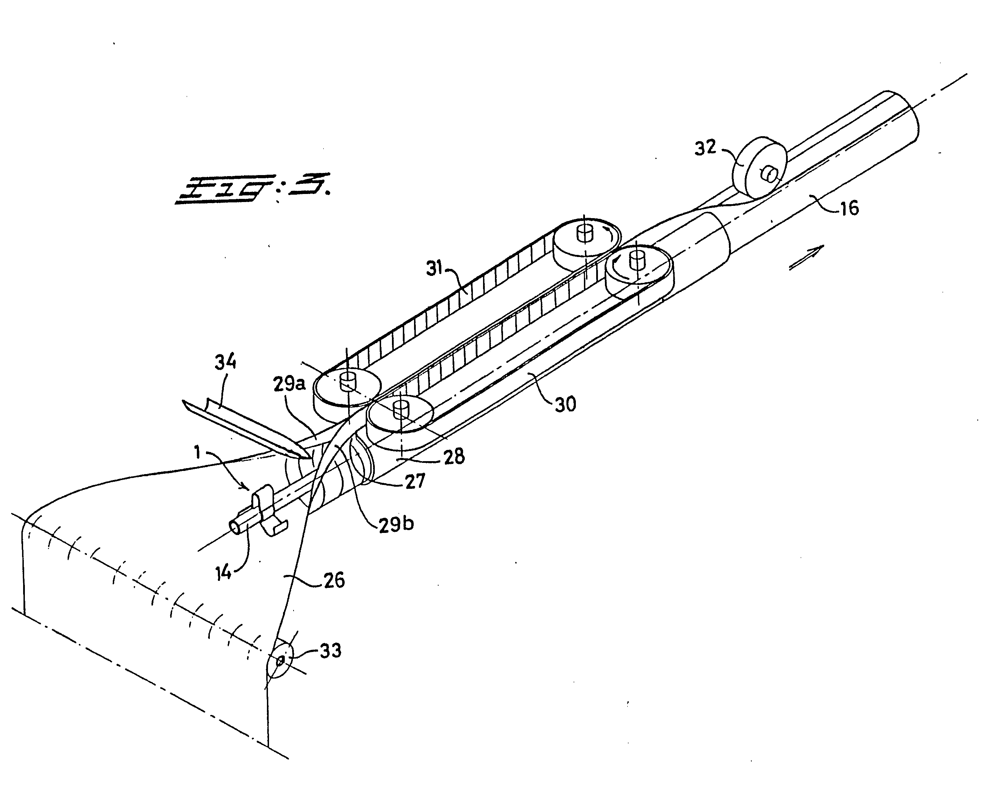

Figure 3 shows a central polybutylene pipe 14 surrounding by a covering 16 from paper, said covering being kept in a concentric relationship with respect to the central pipe, as a result of the spacer 1 described hereinbefore.

The latter tubular covering 16 is obtained by feeding a guide bush 28 comprising an open slot 27 with a web of paper 26 via a guide roller 33 and by gluing together the overlapping edge parts 29a, 29b of said paper web. A proper joining of the edge parts 29a, 29b is obtained by means of two endless bands 30 and 31 cooperating with each other. A roller 32 presses the edge parts 29a, 29b respectively, which have been glued together, upon said covering 16.

A foaming composition is injected into the space provided between the central polybutylene pipe 14 and the covering 16, by means of a feed pipe 34, whereafter the composition is foamed.

The central pipe 14 provided with the foam layer 15 and covering 16 is then conveyed by appropriate means (not shown).

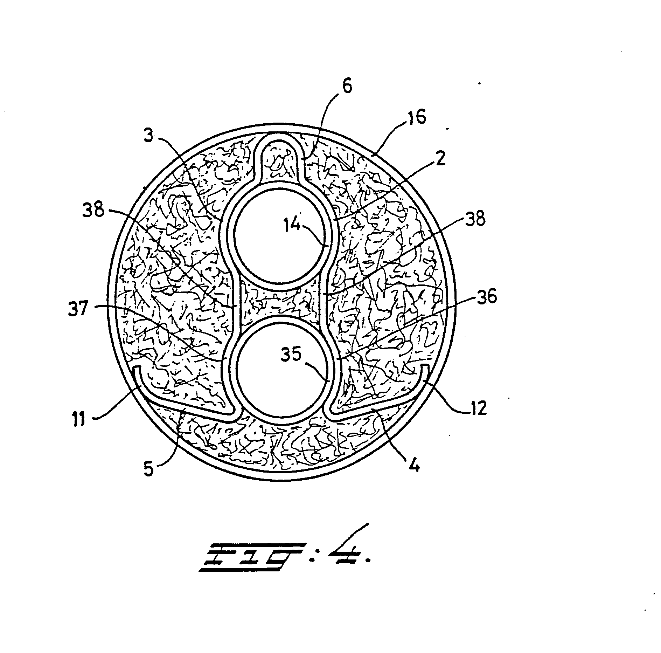

Figure 4 shows a plastic spacer means being open at its lower end, which comprises two opposed resilient first leg portions which leg portions engage a central supply pipe 14.

Through an intermediate resilient part 38 the first leg portions are connected with second resilient leg portions 36 and 37. These second leg portions which form part of a cylinder engage a central return pipe 35.

The second leg portions 36 and 37 are connected with protruding spacing parts 4, 5 having curved extremities 11 and 12.

It should be noted that in this embodiment the spacing parts 4, 5 are rather flat parts, whilst the spacing parts 4, 5 or the embodiment according to fig. 1 are completely curved.

This spacer allows the production of a feed pipe 14 and a return pipe 35 as one assembly surrounded by a foam insulation.

## Claims

1. Composite pipe consisting of at least one inner pipe (14, 35) of a strongly postcrystallizing plastic, surrounded by a tubular covering (16) being maintained in a spaced relation with respect to the inner pipe, the space provided between the inner pipe and the tubular covering being filled with a foamplastics insulating material, characterized in that a plastics spacer (1) having a lateral opening along its length is embedded in the foam plastics between the tubular covering (16) and the inner pipe (14, 35), said spacer comprising two opposite resilient legs (2, 3) with cylindrical sections (7, 8) forming part of one cylinder surface and cooperating with the inner pipe (14) said legs having protruding spacing parts (4, 5) with outwardly curved extremities and at least one additional protruding spacing part (6) resiliently connecting said legs, and said lateral opening being provided between the ends of the legs (2, 3) to enable pushing of the spacer over the inner pipe.

2. Composite pipe according to claim 1, characterized in that the spacer (1) comprises second resilient leg portions (36, 37) capable of engaging a return pipe (35) said second leg portions being connected with first leg portions by an intermediate part (38).

## Revendications

1. Conduite composite consistant en au moins une conduite intérieure (14, 35) d'une matière plastique fortement postcristallisable, entourée d'une gaine tubulaire (16) maintenue en espacement par rapport à la conduite intérieure, l'espace ménagé entre la conduite intérieure et la gaine tubulaire étant rempli d'une matière isolante plastique moussante, caractérisée en ce qu'un élément d'espacement (1) en matière plastique comportant une ouverture latérale dans le sens de sa longeur est noyé dans la matière plastique moussante entre la gaine tubulaire (16) et la conduite intérieure (14, 35), ledit élément d'espacement comprenant deux branches flexibles opposées (2,3) ayant des sections cylindriques (7, 8) faisant partie d'une surface cylindrique et coopérant avec la conduite intérieure (14), lesdites branches présentant des parties d'espacement en protubérance (4, 5) avec des extrémités incurvées vers l'extérieur, et au moins une partie supplémentaire d'espacement en protubérance (6) réunissant de façon flexible lesdites branches, et ladite ouverte latérale étant formée entre les extrémités des branches (2, 3) pour permettre de pousser l'élément d'espacement sur la conduite intérieure.

2. Conduite composite selon la revendication 1, caractérisé en ce que l'élément d'espacement (1) comprend des secondes portions formant des branches flexibles (36, 37) capables de venir en prise avec une conduite de retour (35), lesdites secondes portions de branches étant reliées avec les premières portions de branches par une partie intermédiaire (38).

Patentansprüche

1. Verbundrohr, bestehend aus zumindest einem Innenrohr (14, 35) aus einem stark nachkristallisierenden Kunststoff, das von einem im Abstand zu dem Innenrohr gehaltenen rohrförmigen Mantel (16) umgeben ist, wobei der zwischen dem Innenrohr und dem rohrförmigen Mantel vorgesehene Zwischenraum mit Schaumkunststoff-Isoliermaterial gefüllt ist, dadurch gekennzeichnet, daß ein Kunststoff-Abstandhalter (1) mit einer seitlichen Öffnung entlang seiner Länge in dem Schaumstoff zwischen dem rohrförmigen Mantel (16) und dem Innenrohr (14, 35) eingebettet ist, der Abstandhalter zwei gegenüberliegende federnde Schenkel (2, 3) mit zylindrischen Abschnitten (7, 8) aufweist, die Teil einer einheitlichen Zylinderfläche bilden und mit dem Innenrohr (14) zusammenwirken, die Schenkel vorstehende Abstandsteile (4, 5) mit nach außen gebogenen Endberichen und zumindest einen zusätzlichen, vorstehenden Abstandsteil (6) umfassen, der die Schenkel federnd miteinander verbindet, und daß die seitliche Öffnung zwischen den Enden der Schenkel (2, 3) vorgesehen ist, um das Aufdrücken des Abstandhalters auf das Innenrohr zu ermöglichen.

2. Verbundrohr nach Anspruch 1, dadurch gekennzeichnet, daß der Abstandhalter (1) zwei federnde Schenkelbereiche (36, 37) umfaßt, die mit einem Rücklaufrohr (35) in Eingriff bringbar und durch einen Zwischenteil (38) mit ersten Schenkelberiechen verbunden sind.

$$\mathbf{FIG:1.}$$

FIG:2.

0 046 617

0 046 617

FIG : 4.